# EUROPÄISCHE PATENTSCHRIFT

(11) **EP 0 759 318 B1**
(45) Veröffentlichungstag und Bekanntmachung des Hinweises auf die Patenterteilung: **10.11.1999**
(21) Anmeldenummer: 95112844.6
(22) Anmeldetag: 16.08.1995
(51) Int. Cl.: B01D 25/12

(54) **Verfahren zum Entfeuchten und Trocknen von Feststoff/Flüssigkeits-Gemischen und Vorrichtung zur Durchführung des Verfahrens**
Process for demoisturizing and drying solids/liquid mixtures and apparatus for carrying out the process
Procédé pour déshumidifier et sécher des mélanges solide/liquide et dispositif pour la mise en oeuvre du procédé

(43) Veröffentlichungstag der Anmeldung: 26.02.1997
(73) Patentinhaber: Schade, Horst, Dipl.-Ing., 45525 Hattingen (DE)
(72) Erfinder: Schade, Horst, Dipl. Ing., D-45525 Hattingen (DE); Hoffmann, Egon, Dipl. Ing., D-79618 Rheinfelden (DE)
(74) Vertreter: Behrendt, Arne, Dipl.-Ing.

(56) Entgegenhaltungen:
- EP-A- 0 263 197
- WO-A-94/13382
- DE-A- 3 128 768
- GB-A- 2 258 621

## Beschreibung

Die Erfindung betrifft ein Verfahren zum Entfeuchten und Trocknen von Feststoff/Flüssigkeits-Gemischen, insbesondere von Feststoff-Suspensionen und Schlämmen, bei dem die zu behandelnde Trübe in einer Filterpresse entfeuchtet und der gebildete Filterkuchen anschließend einer Trocknung unterworfen wird, wobei die zu behandelnde Trübe über die Zulaufleitung einer Anzahl von nebeneinander und parallel zueinander angeordneten Filterplatten zugeführt wird, die mit Filtermedium bespannt und über eine Drainage an ein Sammelrohr angeschlossen sind, über das das Filtrat abgeleitet wird, während die Feststoffanteile als Filterkuchen vor dem Filtermedium zurückgehalten werden und wobei das entfeuchtete Gut durch Wärmezufuhr getrocknet wird.

Die Entfeuchtung und Trocknung von Feststoff-Suspensionen und Schlämmen oder anderen Feststoff/Flüssigkeits-Gemischen, die bei chemischen Produktionsverfahren, der Abfallentsorgung sowie der Lebensmittel- oder Aufbereitungstechnik anfallen, erfolgt in vielen Fällen in zwei getrennten Anlagen, z. B. durch Entwässerung mit Zentrifugen, Bandpressen oder Filterpressen in einer ersten Stufe und anschließende Trocknung in einer Drehtrommel oder einem Rohrbündeldrehrohr oder einem Dünnschicht- oder Segmentscheibentrockner in einer zweiten Stufe. In der ersten Anlage wird im allgemeinen maschinell entfeuchtet und mit zwischen geschalteten Komponenten das zu trocknende, feuchte Gut in eine Konsistenz gebracht, in der es in der zweiten Stufe fertig getrocknet werden kann.

Diese zum Stand der Technik gehörenden kombinierten Anlagen erfordern eine Vielzahl von Apparaturen und Komponenten und sind sehr energie- und kostenträchtig, da der sichere Betrieb einen hohen Aufwand an Meß- und Regeltechnik erfordert.

Die Trocknungsanlagen werden kontinuierlich betrieben, so daß häufig kurze Trocknungszeiten eingehalten werden müssen. Dies setzt voraus, daß für das Erreichen des vorgesehenen Trocknungsgrades sehr hohe Temperaturdifferenzen zwischen dem Trocknungsgut und den Heizflächen oder dem Trocknungsmittel eingehalten werden müssen, die zwischen 180 und 450 °C liegen. Auf diese Weise können die flüchtigen, oft gefährlichen Bestandteile des Trocknungsgutes entweichen, müssen mit dem Kondensat niedergeschlagen und aus diesem wieder abgetrennt werden.

Aus der EP-A-0 263 197 ist ein Verfahren und eine Vorrichtung zum Entwässern und Trocknen von in Flüssigkeiten dispergierten Feststoffteilchen bekannt, bei der unter Vermeidung aufwendiger Anlagen und Apparate in einer einzigen Vorrichtung eine maschinelle Entfeuchtung mit anschließender thermischer Trocknung durchgeführt werden kann. Dabei gibt es zwischen der maschinellen Entfeuchtung und der thermischen Trocknung keine zusätzlichen Anlagenkomponenten mehr, um das zunächst anfallende feuchte Gemisch trocknungsgerecht vorzubehandeln. Vielmehr wird das zu trocknende Gut ohne Zwischenstufe unmittelbar nach der Entfeuchtung in genau der gleichen Konsistenz thermisch weiter getrocknet, in der es nach der maschinellen Entfeuchtung in der gleichen Vorrichtung anfällt. Die Entfeuchtung und Trocknung erfolgt im Chargenbetrieb; im Gegensatz zu den kontinuierlich betriebenen Trocknungsverfahren spielt beim Chargenbetrieb die Zeit nicht die entscheidende Rolle für das Erreichen des gewünschten Trocknungsgrades; die Trocknung kann deshalb mit kleinen Temperaturdifferenzen von z. B. 20 °C oder 80 °C zwischen Heizplatte und Trocknungsgut erfolgen.

Das Verfahren wird mit einer Vorrichtung durchgeführt, bei der eine Filterpresse, ein Speise- und Kompressionsbehälter mit Speisedruckkammer und eingebautem Wärmeaustauscher sowie ein Vakuumkollektor mit Vakuumpumpe hintereinandergeschaltet sind. Die Filterpresse besteht aus abwechselnd aufeinanderfolgenden Vakuumplatten und Heizplatten. Die Heizplatten sind mit Aufnahmekammern versehen, in die die einzudickende, zu filtrierende und zu trocknende Suspension aus Flüssigkeiten und darin dispergierten Feststoffteilchen eingeleitet wird. Die Entwässerung und Trocknung erfolgt durch gleichzeitiges Komprimieren und Einwirkung des Druckes des Dampfes, der im Inneren des zu entwässernden Materials erzeugt wird. Hierbei werden die flüssige Phase und die Gasphase zusammen unter Vakuumwirkung durch poröse Trennwände angesaugt und von der Feststoffphase abgetrennt.

Nachteilig ist bei diesem Verfahren, daß sich keine gleichmäßige Entfeuchtungsfront bildet, so daß mit zunehmender Entfeuchtung des Filterkuchens der Gasdurchsatz infolge von Gasdurchbrüchen ansteigt, was durch Rißbildungen und zunehmende Porosität des Filterkuchens begünstigt wird. Da ein wesentlicher Teil der Flüssigphase mit beträchtlichem Energieverbrauch verdampft und als Gasphase ausgetrieben wird, muß aus wirtschaftlichen Gründen die Entfeuchtung nach Erreichen einer bestimmten Gasdurchsatzmenge abgebrochen werden. Auch bei diesem Verfahren ist die Entwässerungsleistung nicht optimal.

Zur Erzielung eines besseren Entfeuchtungsgrades eines Feststoff/Flüssigkeits-Gemisches, das auf ein Filtermedium aufgebracht, beheizt und gleichzeitig gepreßt wird, ist es aus der DE-A-42 24 648 bekannt, die Beheizung und den Preßdruck des Feststoff/Flüssigkeits-Gemisches so vorzunehmen, daß eine Dampfphase gebildet wird, durch deren Dampfdruck und den gleichzeitig ausgeübten Preßdruck die Flüssigphase des Gemisches wenigstens zum überwiegenden Teil in flüssiger Form durch das Filtermedium ausgetrieben wird. Eine Vorrichtung zur Durchführung dieses Verfahrens sieht vor, auf der dem Filtermedium gegenüberliegenden Seite eine Einrichtung zur gleichzeitigen Erhitzung des Gemisches auf eine zur Bildung einer Gasphase ausreichenden Temperatur und zur Ausübung eines Preßdruckes auf das Gemisch vorzusehen.

Auch bei dieser Methode sowie einer aus der DE-A-38 19 391 bekannten Vorrichtung, die eine mit einem Wärmeträgermedium beheizte Arbeitsfläche aufweist, wird der Wärmetransport von der Heizfläche zur Verdampfungs- oder Verdunstungsebene im Inneren des Trocknungsgutes sowie der Dampftransport von der innen liegenden Verdampfungs- und Verdunstungsebene aus nach außen benachteiligt. Zwischen der Heizfläche und der geschlossenen Entfeuchtungsfront trocknet das Gut weitgehend ab und es baut sich ein Dampfpolster mit guten isolierenden Eigenschaften auf; da in den gasgefüllten, flüssigkeitsfreien Poren des stark abgetrockneten Gutes die Wärmeleitung um ein Vielfaches kleiner ist als im feuchten Gut, und zwar sowohl in den mit Flüssigkeit gefüllten Poren als auch in den Flüssigkeitsfilmen an den Porenoberflächen des Trocknungsgutes, wird die Wärmeübertragung durch das Dampfpolster erheblich behindert.

Auch bei Vorrichtungen, wie sie beispielsweise aus der DE-A-39 01 851 bekannt sind, bei denen beheizte Filterplatten mit Filtermedien und Drainagen beidseitig angeordnet sind, lassen sich Nachteile und Behinderungen bei der Wärmeübertragung und beim Dampftransport nicht vermeiden. Bei diesen Vorrichtungen bilden Drainagen und Filtermedien nachteilige Isolationsschichten zwischen Heizfläche und Trocknungsgut. Durch den beidseitigen Aufbau von zwei geschlossenen Entfeuchtungsfronten läßt sich eine homogene Trocknung auch deswegen nicht erzielen, weil in der Mitte das Trocknungsgut noch verhältnismäßig feucht bleibt, während die Feuchtigkeit an den beiden beheizten Außenseiten bereits weitgehend abgetrocknet ist. Die Folge ist, daß die Feuchtigkeit im Trocknungsgut inhomogen verteilt ist, die erzielbaren Trocknungszeiten unnötig lang und die erreichbaren Trocknungsgrade begrenzt sind.

Der Erfindung liegt die Aufgabe zugrunde, die bekannten Trocknungsverfahren in dem Sinne weiterzuentwickeln, daß bei der Trocknung die Wärmeübertragung durch Strahlungsaustausch, Wärmeleitung und konvektive Energiemitführung deutlich verbessert und der Trocknungsvorgang wirksam beschleunigt wird.

Ferner liegt der Erfindung die Aufgabe zugrunde, den Stofftransport zu verbessern und den bei der Trocknung neu gebildeten Dampf schneller aus dem Inneren des Trocknungsgutes nach außen zu fördern, so daß das Gut zügiger und gleichmäßiger als mit den bekannten Methoden homogen getrocknet werden kann.

Ausgehend von einem Verfahren der eingangs beschriebenen Art besteht die Erfindung in der Kombination der folgenden Merkmale:
a) Der bei der Entwässerung gebildete Filterkuchen wird beidseitig gegen jeweils zwischen zwei Filterplatten und parallel zu diesen angeordnete Heizplatten gedrückt, die auf eine konstante Trocknungstemperatur aufgeheizt werden,
b) das Andrücken des Filterkuchens an die Oberflächen der Heizplatten erfolgt mittels eines unter Druck stehenden Gases, das über das Sammelrohr und die Drainage zugeführt wird,
c) nach dem Aufheizen des Filterkuchens auf eine vorgegebene Temperatur wird die Zufuhr des unter Druck stehenden Gases abgestellt und ein unter niedrigem Druck stehendes Spülgas in die Filterpresse eingeleitet und über die Drainage und das Sammelrohr abgeführt und
d) die Umstellung von Druckgas (Aufheizphase) auf Spülgas (Verdampfungsphase) und umgekehrt wird wiederholt bis der gewünschte Trocknungsgrad des Kuchens erreicht ist, worauf der getrocknete Filterkuchen durch Öffnen der Filterpresse in üblicher Weise entfernt wird.

Weitere Merkmale der Erfindung sehen vor,
- daß das Spülgas über die Zuführungsleitung für die Trübe in die Filterpresse oder in den Spalt zwischen Heizplatte und Filterkuchen eingeleitet wird,
- daß die Druckspülung mit dem unter niedrigem Druck stehenden Spülgas abwechselnd unter mindestens zwei unterschiedlichen Druckstufen durchgeführt wird, wobei wenigstens eine der Druckstufen im Vakuumbereich liegt,
- daß die Druckstufen bei der Druckspülung so ausgewählt werden, daß die Temperatur des Filterkuchens zwischen zwei vorgegebenen Temperaturen pendelt und die Umschaltung auf eine andere Druckstufe über die in dem Filterkuchen gemessene Temperatur und/oder in Abhängigkeit von der Zeit gesteuert wird,
- daß die Druckspülung mit vorgetrockneter und/oder erhitzter Luft durchgeführt wird und
- daß die Erwärmung der Heizplatten auf die für die Trocknung erforderliche Temperatur ganz oder teilweise mit Solarenergie erfolgt.

Bei einem Verfahren zum Entfeuchten und Trocknen von Feststoff/Flüssigkeits-Gemischen, insbesondere von Feststoff-Suspensionen und Schlämmen, bei dem die zu behandelnde Trübe in einer Membranfilterpresse entfeuchtet und der gebildete Filterkuchen anschließend einer Trocknung unterworfen wird, wobei die zu behandelnde Trübe über die Zulaufleitung einer Anzahl von nebeneinander und parallel zueinander angeordneten Membranfilterplatten zugeführt wird, die mit Filtermedium bespannt und über eine Drainage an ein Sammelrohr angeschlossen sind, über das das Filtrat abgeleitet wird, während die Feststoffanteile als Filterkuchen vor dem Filtermedium zurückgehalten werden, besteht die Erfindung darin, daß
a) der bei der Entwässerung gebildete Filterkuchen beidseitig gegen jeweils zwischen zwei Membranfilterplatten und parallel zu diesen angeordnete Heizplatten gedrückt wird, die auf eine konstante Trocknungstemperatur aufgeheizt werden,
b) das Andrücken des Filterkuchens an die Oberflächen der Heizplatten durch Anpressen der Membranen an den Filterkuchen mittels Gas oder Flüssigkeit erfolgt,
c) während des gesamten Trocknungsvorganges ein unter Druck stehendes Spülgas in den zu trocknenden Filterkuchen eingeleitet wird, das über die Drainage und das Sammelrohr abgeleitet wird, und
d) die Druckspülung zweistufig gefahren wird, indem das Spülgas abwechselnd unter einem hohen und einem niedrigen Druck eingeleitet wird bis der gewünschte Trocknungsgrad erreicht ist, worauf der getrocknete Filterkuchen durch Öffnen der Filterpresse in üblicher Weise entfernt wird.

Bei einer Filterpresse zur Durchführung der vorstehend erwähnten Verfahren, die aus einer Anzahl von nebeneinander und parallel zueinander angeordneten Filterplatten besteht, die über eine Drainage an ein Sammelrohr angeschlossen sind, wobei zwischen jeweils zwei Filter- oder Membranplatten in das Plattenpaket Heizplatten eingebaut sind, die auf eine gegebene Temperatur aufheizbar sind, sieht die Erfindung vor, daß die Heizplatten vorzugsweise als Führungsschienen für eine Vorrichtung, insbesondere Schaber oder Bürsten, ausgeführt sind, mit der der an den Filter- und Heizplatten anhaftende Kuchen durch Herauf- und Herunterfahren der Vorrichtung entfernt werden kann.

Gegenstand der Erfindung ist ferner ein Verfahren zum Entfeuchten und Trocknen von Feststoff/Flüssigkeits-Gemischen, insbesondere von Feststoff-Suspensionen und Schlämmen, bei dem die zu behandelnde Trübe in einer Filterpresse, die abwechselnd mit aufheizbaren Membranplatten und aufheizbaren Filterplatten bestückt ist, entfeuchtet und der gebildete Filterkuchen anschließend einer Trocknung unterworfen wird, wobei die zu behandelnde Trübe über die Zuleitung einer Anzahl von abwechselnd nebeneinander und parallel zueinander angeordneten aufheizbaren Membran- und Kammerfilterplatten zugeführt wird, die mit Filtermedium bespannt und über Drainagen an Sammelrohre angeschlossen sind, über die das Filtrat abgeleitet wird, während die Feststoffanteile als Filterkuchen vor dem Filtermedium zurückgehalten werden. Zur Durchführung dieses Verfahrens sieht die Erfindung die Kombination der folgenden Merkmale vor:
a) Der bei der Entwässerung gebildete Filterkuchen wird beidseitig gegen jeweils zwischen zwei Membranfilterplatten und parallel zu diesen angeordnete Kammerfilterplatten gedrückt, die auf eine konstante Trocknungstemperatur aufgeheizt werden,
b) das Andrücken des Filterkuchens an die Oberflächen der Kammerfilterplatten erfolgt durch Anpressen der Membranen an den Filterkuchen mittels Gas oder Flüssigkeit,
c) während des gesamten Trocknungsvorganges wird ein unter Druck stehendes Spülgas in den zu trocknenden Filterkuchen über das Sammelrohr und die Drainage der Filterplatten eingeleitet und über die Drainage und das Sammelrohr der Membranplatten abgeleitet,
d) die Druckspülung wird zweistufig gefahren, indem das Spülgas abwechselnd unter einem hohen und einem niedrigen Druck eingeleitet wird bis der gewünschte Trocknungsgrad erreicht ist, worauf der getrocknete Filterkuchen durch Öffnen der Filterpresse in üblicher Weise entfernt wird.

Gegenstand der Erfindung ist ferner ein Verfahren zum Entfeuchten und Trocknen von Feststoff/Flüssigkeits-Gemischen, insbesondere von Feststoff-Suspensionen und Schlämmen, bei dem die zu behandelnde Trübe in einer Filterpresse, die mit aufheizbaren Kammerfilterplatten bestückt ist, entfeuchtet und der gebildete Filterkuchen anschließend einer Trocknung unterworfen wird, wobei die zu behandelnde Trübe über die Zuleitung einer Anzahl von nebeneinander und parallel zueinander angeordneten aufheizbaren Kammerfilterplatten zugeführt wird, die mit Filtermedium bespannt und über Drainagen an Sammelrohre angeschlossen sind, über die das Filtrat abgeleitet wird, während die Feststoffanteile als Filterkuchen vor dem Filtermedium zurückgehalten werden.

Zur Durchführung dieses Verfahrens sieht die Erfindung vor, daß
a) der bei der Entwässerung gebildete Filterkuchen beidseitig gegen jeweils zwischen zwei in der Plattenreihe an ungerader Stelle liegende Kammerfilterplatten und parallel zu diesen angeordnete in der Plattenreihe an gerader Stelle liegende Kammerfilterplatten gedrückt wird, die auf eine konstante Trocknungstemperatur aufgeheizt werden,
b) das Andrücken des Filterkuchens an die Oberflächen der Kammerfilterplatten, die in der Plattenreihe an gerader Stelle liegen, mittels eines unter Druck stehenden Gases, das über das Sammelrohr und die Drainage den in der Plattenreihe an ungerader Stelle liegenden Kammerfilterplatten zugeführt wird, erfolgt,
c) nach dem Aufheizen des Filterkuchens auf eine vorgegebene Temperatur die Zufuhr des unter Druck stehenden Gases abgestellt und ein unter niedrigem Druck stehendes Spülgas in die Kammerfilterpresse über das Sammelrohr und die Drainage der in der Plattenreihe an gerader Stelle liegenden Kammerfilterplatten eingeleitet und über die Drainage und das Sammelrohr der in der Plattenreihe an ungerader Stelle liegenden Kammerfilterplatten abgeleitet wird,
d) die Umstellung von Druckgas (Aufheizphase) auf Spülgas (Verdampfungsphase) und umgekehrt wiederholt wird bis der gewünschte Trocknungsgrad erreicht ist, worauf der getrocknete Filterkuchen durch Öffnen der Filterpresse in üblicher Weise entfernt wird.

Auf der Zeichnung sind mehrere Ausführungsformen der Erfindung schematisch dargestellt. Es zeigen:
- Fig. 1: eine Filterpresse mit abwechselnd angeordneten Filterkammerplatten und Heizplatten,
- Fig. 2: eine Filterpresse mit abwechselnd angeordneten Membranplatten und Heizplatten,
- Fig. 3: eine Filterpresse mit abwechselnd angeordneten aufheizbaren Membranplatten und aufheizbaren Filterkammerplatten und
- Fig. 4: eine Filterpresse, bei der ausschließlich aufheizbare Filterkammerplatten nebeneinander angeordnet sind.

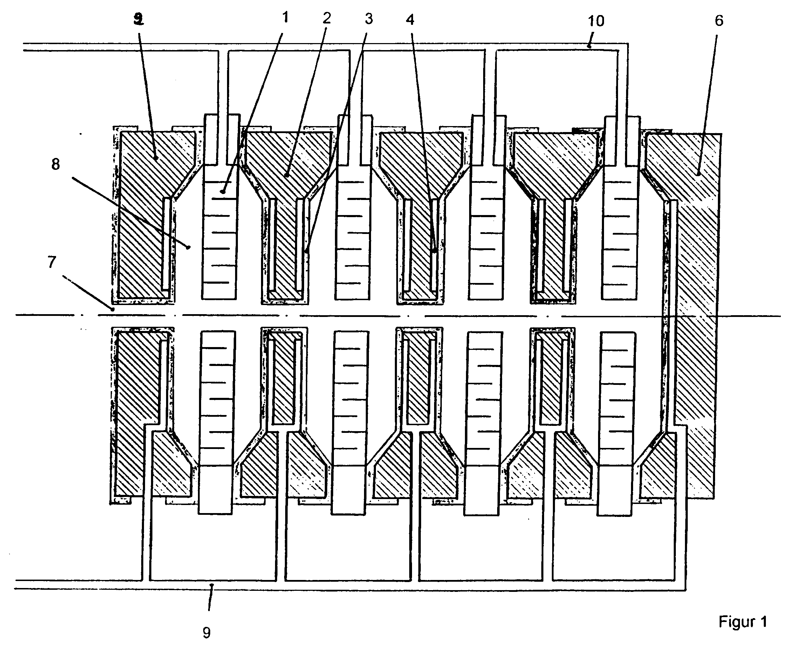

Bei dem auf Fig. 1 dargestellten Filterplattentrockner besteht das Plattenpaket aus abwechselnd parallel nebeneinander angeordneten Filterkammerplatten 2 und Heizplatten 1, wobei jeweils zwischen zwei Filterkammerplatten eine Heizplatte angeordnet ist. Die Filterkammerplatten sind in üblicher Weise von einem Filtermedium, z. B. einem Filtertuch 3, umgeben und enthalten eine Drainage 4.

Die abwechselnd parallel nebeneinander angeordneten Platten 1 und 2 werden auf der einen Seite von der Kopfplatte 5 und auf der anderen Seite von der Endplatte 6 begrenzt. Die zwischen zwei Filterkammerplatten 2 ausgebildete mit 8 bezeichnete Filterkammer wird von der Heizplatte in zwei Abteile unterteilt.

Die maschinelle Entfeuchtung erfolgt in der gleichen Weise, wie bei einer üblichen Filtration. Die zu reinigende Suspension wird über die Zulaufleitung 7, den sogenannten Trübezulauf zugeführt, wobei sich die einzelnen Kammern mit feuchtem Gemisch füllen, während das Filtrat über die Drainage 4 zu einem Sammelrohr 9 abgeleitet wird. Am Ende der Filtration sind die Abteile der Kammer 8 auf beiden Seiten der Heizplatten 1 mit dem zu trocknenden Gut gefüllt. Die Trocknung beginnt als zusätzliche Verfahrensstufe innerhalb des chargenweisen Prozeßablaufes nach dem Ende der Filtration.

Das in der Kammer 8 befindliche feuchte Trocknungsgut wird von den parallel anliegenden Heizplatten 1 erwärmt; die Heizplatten werden über einen Anschluß 10 mittels Dampf oder einer geeigneten Wärmeträgerflüssigkeit aufgeheizt und auf einer konstanten Heizplattentemperatur gehalten.

Gleichzeitig wird über das Sammelrohr 9 und die Drainage 4 auf der Rückseite des Filtermediums 3 ein unter Druck stehendes Gas eingeleitet, so daß das feuchte Trocknungsgut fest gegen die beiden sich gegenüberliegenden Flächen der Heizplatte gedrückt wird. Sobald das feuchte Trocknungsgut eine vorgewählte obere Temperatur erreicht hat, wird das unter Druck stehende Gas, das zum Anpressen des feuchten Trocknungsgutes an die Heizplatte dient, am Sammelrohranschluß 9 abgesperrt und statt dessen eine Druckspülung mit einem niedrigeren Druck vorgenommen. Zu diesem Zweck wird ein Spülgas über den Trübezulauf 7 zugeführt, das flächenartig in die freien Porenräume, vorzugsweise in den Spalt zwischen Trocknungsgut 8 und Heizplatten 1, verteilt wird, das in der Kammer 8 befindliche Trocknungsgut und das Filtermedium 3 durchströmt und von dort über die Drainage 4 in das Sammelrohr 9 gelangt. Das Spülgas kann im Kreislauf gefahren und erneut über den Trübezulauf 7 aufgegeben werden.

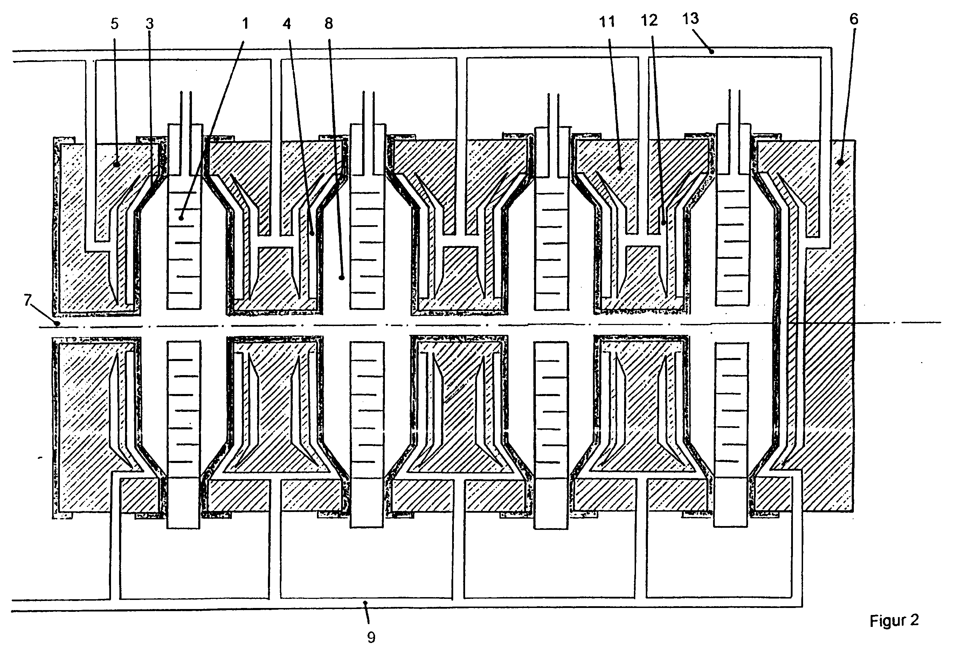

Fig. 2 zeigt eine Filterpresse zur Durchführung des Verfahrens, bei der Membranplatten 11 benutzt werden, wobei zwischen jeweils zwei Membranplatten Heizplatten 1 eingesetzt sind. Die Zufuhr der Suspension erfolgt, wie bei der vorstehend beschriebenen Ausführungsform, über den Trübezulauf 7, wobei das feuchte Trocknungsgut in der mit 8 bezeichneten Kammer zurückgehalten wird. Das durch das Filtermedium 3 hindurchtretende Filtrat wird über die Drainage 4 und das Sammelrohr 9 abgeleitet. Das sich in der Kammer 8 ansammelnde Trocknungsgut kann über die Membranpressung während des gesamten Trocknungsvorganges ohne Abschaltung fest an die Heizplatte gedrück werden. Zu diesem Zweck wird über eine mit 13 bezeichnete Speiseleitung ein unter Druck stehendes Medium in den Preßraum 12 geleitet, dessen als Membran ausgebildete Wandung sich in Richtung der Heizplatte verschiebt und den Filterkuchen an diese andrückt. Die Spülung, die, wie bei der ersten Ausführungsform, durch Zufuhr eines unter Druck stehenden Gases über den Trübezulauf 7 erfolgt, kann bei dieser Ausführungsform permanent wirksam bleiben, da die Drainage 4 und das Sammelrohr 9 bei Einsatz von Membranplatten 11 bei der Druckspülung während der gesamten Trocknungszeit für die Ableitung des Spülgases zur Verfügung stehen.

Die Erfindung sieht vor, die Druckspülung zweistufig zu fahren, wobei zwischen einem hohen und einem niedrigen Spüldruck hin- und hergeschaltet wird.

Das Herausnehmen des Filterkuchens erfolgt in bekannter Weise durch Öffnen der Filterpresse, so daß der getrocknete Filterkuchen nach unten herausfällt.

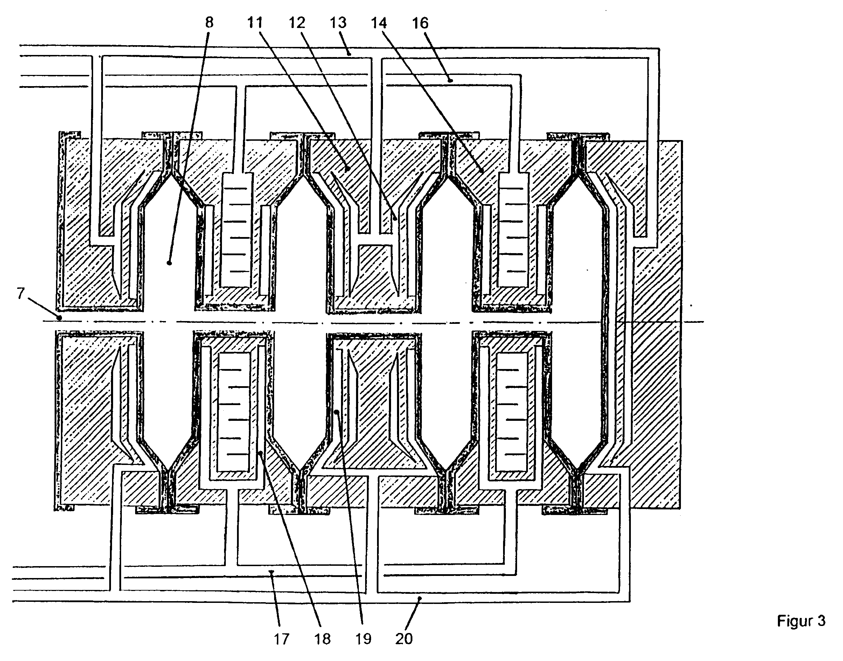

Der auf Fig. 3 dargestellte Filterplattentrockner unterscheidet sich von den Ausführungsformen gemäß 1 und 2 dadurch, daß aufheizbare Filterplatten benutzt werden. Dabei besteht das Plattenpaket aus abwechselnd nebeneinander angeordneten aufheizbaren Membranplatten 11 und aufheizbaren Filterkammerplatten 14. Die zu reinigende Suspension wird wiederum über den Trübezulauf 7 in die Presse eingeleitet; das feuchte Trocknungsgut, das sich in der Kammer 8 sammelt, wird über die Membranpressung gegen die Filterkammerplatten 14 gedrückt. Das Preßmedium ist dabei gleichzeitig auch das Heizmedium für die Membranplatte und wird über die Speiseleitung 13 in den Preßraum 12 eingeleitet. Die aufheizbaren Filterkammerplatten sind über eine separate Sammelheizleitung 16 mit dem Heizmedium verbunden.

Die Einleitung des Spülgases erfolgt bei dieser Ausführungsform über das Sammelrohr 17 und die Drainage 18 der Filterkammerplatten 14. Das Gas wird durch das in der Kammer 8 befindliche Trocknungsgut gedrückt und über die Drainage 19 und das Sammelrohr 20 der Membranplatten 11 abgeleitet.

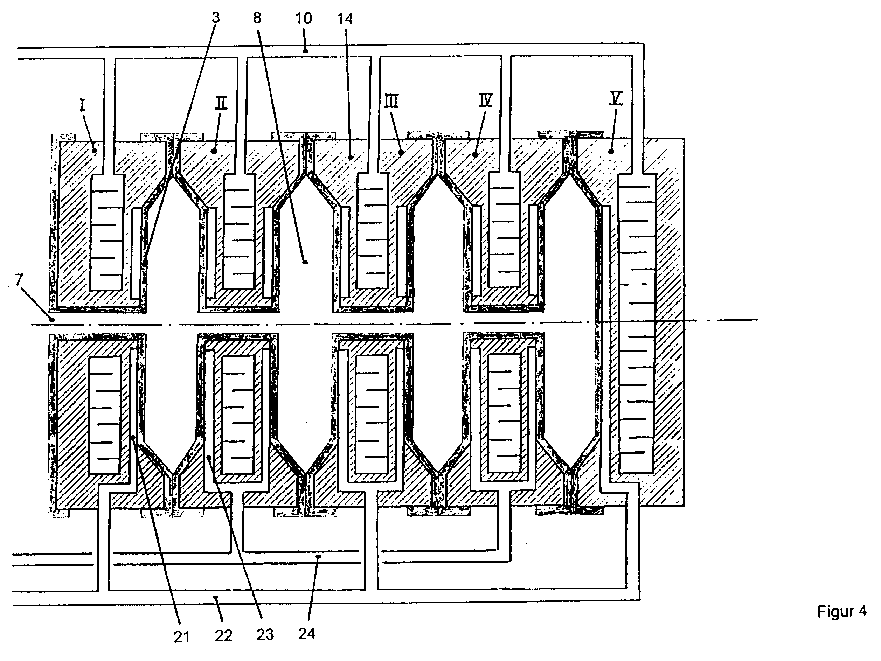

Der auf Fig. 4 dargestellte Filterplattentrockner besteht aus einem Plattenpaket aus einer Anzahl beheizbarer Filterkammerplatten 14. Die Platten sind nebeneinander in Reihe angeordnet und haben somit innerhalb des Plattenpaketes eine gerade Position (II, IV, VI ...) oder eine ungerade Position (I, III, V, ...). Die Drainagen 21 der Filterkammerplatten mit ungerader Position sind mit einem ersten Sammelrohr 22 verbunden, während die Drainagen 23 der Filterkammerplatten mit gerader Position an ein zweites Sammelrohr 24 angeschlossen sind.

Alle Filterkammerplatten 14 sind an einen Heizanschluß 10 angeschlossen, über den sie aufgeheizt werden können. Gleichzeitig wird über das erste Sammelrohr 22 und die Drainage 21 auf der Rückseite des Filtermediums 3 ein unter Druck stehendes Gas aufgegeben, so daß das feuchte Trocknungsgut, das sich in der Kammer 8 gesammelt hat, an die gegenüberliegende Wandung der Filterkammerplatte mit gerader Position drückt.

Sobald das Trocknungsgut auf eine vorgewählte obere Temperatur aufgeheizt ist, wird das Druckgas im ersten Sammelrohr 22 abgesperrt und statt dessen die Druckspülung mit der niedrigeren Druckstufe durchgeführt. Zu diesem Zweck wird das Spülgas über das zweite Sammelrohr 24 und die Drainage 23 in das Trocknungsgut gedrückt und über die Drainage 21 und das Sammmelrohr 22 abgeleitet.

Wenn nach einiger Zeit das Trocknungsgut die vorgewählte untere Temperatur erreicht hat, wird der Vorgang umgekehrt, d. h. von "Spülung" auf "Anpressung" umgeschaltet, so daß, wie zu Beginn des Trocknungsvorganges, unter Druck stehendes Gas über die Leitung 22 und die Drainage 21 durch das Filtermedium geleitet und der angetrocknete Kuchen an die Filterkammerplatte mit gerader Position angedrückt wird. Dabei erwärmt sich das Trocknungsgut erneut. Ist die obere Temperaturgrenze erneut erreicht, wird wieder auf "Spülung" umgeschaltet und der Wechsel so lange wiederholt bis das Trocknungsgut den gewünschten Trocknungsgrad erreicht hat.

## Patentansprüche

1. Verfahren zum Entfeuchten und Trocknen von Feststoff/Flüssigkeits-Gemischen, insbesondere von Feststoff-Suspensionen und Schlämmen, bei dem die zu behandelnde Trübe in einer Filterpresse entfeuchtet und der gebildete Filterkuchen anschließend einer Trocknung unterworfen wird, wobei die zu behandelnde Trübe über die Zulaufleitung einer Anzahl von nebeneinander und parallel zueinander angeordneten Filterplatten zugeführt wird, die mit Filtermedium bespannt und über eine Drainage an ein Sammelrohr angeschlossen sind, über das das Filtrat abgeleitet wird, während die Feststoffanteile als Filterkuchen vor dem Filtermedium zurückgehalten werden und wobei das entfeuchtete Gut durch Wärmezufuhr getrocknet wird, mit den folgenden Merkmalen:
a) Der bei der Entwässerung gebildete Filterkuchen wird beidseitig gegen jeweils zwischen zwei Filterplatten und parallel zu diesen angeordnete Heizplatten gedrückt, die auf eine konstante Trocknungstemperatur aufgeheizt werden,
b) das Andrücken des Filterkuchens an die Oberflächen der Heizplatten erfolgt mittels eines unter Druck stehenden Gases, das über das Sammelrohr und die Drainage zugeführt wird,
c) nach dem Aufheizen des Filterkuchens auf eine vorgegebene Temperatur wird die Zufuhr des unter Druck stehenden Gases abgestellt und ein unter niedrigerem Druck stehendes Spülgas in die Filterpresse eingeleitet und über die Drainage und das Sammelrohr abgeführt und
d) die Umstellung von Druckgas (Aufheizphase) auf Spülgas (Verdampfungsphase) und umgekehrt wird wiederholt bis der gewünschte Trocknungsgrad des Kuchens erreicht ist, worauf der getrocknete Filterkuchen durch Öffnen der Filterpresse in üblicher Weise entfernt wird.

2. Verfahren nach Anspruch 1, dadurch gekennzeichnet, daß das Spülgas über die Zuführungsleitung für die Trübe in die Filterpresse eingeleitet wird.

3. Verfahren nach Anspruch 1, dadurch gekennzeichnet, daß das Spülgas in den Spalt zwischen Heizplatte und Filterkuchen eingeleitet wird.

4. Verfahren nach einem der Ansprüche 1 bis 3, dadurch gekennzeichnet, daß die Druckspülung mit dem unter niedrigem Druck stehenden Spülgas abwechselnd unter mindestens zwei unterschiedlichen Druckstufen durchgeführt wird.

5. Verfahren nach Anspruch 4, dadurch gekennzeichnet, daß wenigstens eine der Druckstufen im Vakuumbereich liegt.

6. Verfahren nach einem der Ansprüche 1 bis 5, dadurch gekennzeichnet, daß die Druckstufen bei der Druckspülung so ausgewählt werden, daß die Temperatur des Filterkuchens zwischen zwei vorgegebenen Temperaturen pendelt und daß die Umschaltung auf eine andere Druckstufe über die in dem Filterkuchen gemessene Temperatur gesteuert wird.

7. Verfahren nach Anspruch 6, dadurch gekennzeichnet, daß der Wechsel zwischen den jeweiligen Druckstufen in Abhängigkeit von der Zeit gesteuert wird.

8. Verfahren nach einem der Ansprüche 1 bis 7, dadurch gekennzeichnet, daß die Druckspülung mit vorgetrockneter und/oder erhitzter Luft durchgeführt wird.

9. Verfahren nach einem der Ansprüche 1 bis 8, dadurch gekennzeichnet, daß die Erwärmung der Heizplatten auf die für die Trocknung erforderliche Temperatur ganz oder teilweise mit Solarenergie erfolgt.

10. Verfahren zum Entfeuchten und Trocknen von Feststoff/Flüssigkeits-Gemischen, insbesondere von Feststoff-Suspensionen und Schlämmen, bei dem die zu behandelnde Trübe in einer Membranfilterpresse entfeuchtet und der gebildete Filterkuchen anschließend einer Trocknung unterworfen wird, wobei die zu behandelnde Trübe über die Zulaufleitung einer Anzahl von nebeneinander und parallel zueinander angeordneten Membranfilterplatten zugeführt wird, die mit Filtermedium bespannt und über eine Drainage an ein Sammelrohr angeschlossen sind, über das das Filtrat abgeleitet wird, während die Feststoffanteile als Filterkuchen vor dem Filtermedium zurückgehalten werden, mit den folgenden Merkmalen:
a) Der bei der Entwässerung gebildete Filterkuchen wird beidseitig gegen jeweils zwischen zwei Membranfilterplatten und parallel zu diesen angeordnete Heizplatten gedrückt, die auf eine konstante Trocknungstemperatur aufgeheizt werden,
b) das Andrücken des Filterkuchens an die Oberflächen der Heizplatten erfolgt durch Anpressen der Membranen an den Filterkuchen mittels Gas oder Flüssigkeit,
c) während des gesamten Trocknungsvorganges wird ein unter Druck stehendes Spülgas in den zu trocknenden Filterkuchen eingeleitet, das über die Drainage und das Sammelrohr abgeleitet wird, und
d) die Druckspülung wird zweistufig gefahren, indem das Spülgas abwechselnd unter einem hohen und einem niedrigen Druck eingeleitet wird bis der gewünschte Trocknungsgrad erreicht ist, worauf der getrocknete Filterkuchen durch Öffnen der Filterpresse in üblicher Weise entfernt wird.

11. Filterpresse zur Durchführung des Verfahrens nach den Ansprüchen 1 bis 10 , bestehend aus einer Anzahl von nebeneinander und parallel zueinander angeordneten Filterplatten (2) oder Membranfilterplatten (5), die über eine Drainage (4) an ein Sammelrohr (9) angeschlossen sind, wobei zwischen jeweils zwei Filter- oder Membranplatten (2, 5) in das Plattenpaket Heizplatten (1) eingebaut sind, die auf eine gegebene Temperatur aufheizbar sind, die Heizplatten (1) als Führungsschienen für eine Vorrichtung, insbesondere Schaber oder Bürsten, ausgeführt sind, mit der der an den Filter-, Membran- und Heizplatten anhaftende Kuchen durch Herauf- und Herunterfahren der Vorrichtung entfernt werden kann.

12. Verfahren zum Entfeuchten und Trocknen von Feststoff/Flüssigkeits-Gemischen, insbesondere von Feststoff-Suspensionen und Schlämmen, bei dem die zu behandelnde Trübe in einer Filterpresse, abwechselnd mit aufheizbaren Membranplatten und aufheizbaren Filterplatten bestückt, entfeuchtet und der gebildete Filterkuchen anschließend einer Trocknung unterworfen wird, wobei die zu behandelnde Trübe über die Zuleitung einer Anzahl von abwechselnd nebeneinander und parallel zueinander angeordneten aufheizbaren Membran- und Kammerfilterplatten zugeführt wird, die mit Filtermedium bespannt und über Drainagen an Sammelrohre angeschlossen sind, über die das Filtrat abgeleitet wird, während die Feststoffanteile als Filterkuchen vor dem Filtermedium zurückgehalten werden, mit den folgenden Merkmalen:
a) Der bei der Entwässerung gebildete Filterkuchen wird beidseitig gegen jeweils zwischen zwei Membranfilterplatten und parallel zu diesen angeordnete Kammerfilterplatten gedrückt, die auf eine konstante Trocknungstemperatur aufgeheizt werden,
b) das Andrücken des Filterkuchens an die Oberflächen der Kammerfilterplatten erfolgt durch Anpressen der Membranen an den Filterkuchen mittels Gas oder Flüssigkeit,
c) während des gesamten Trocknungsvorganges wird ein unter Druck stehendes Spülgas in den zu trocknenden Filterkuchen über das Sammelrohr und die Drainage der Filterplatten eingeleitet und über die Drainage und das Sammelrohr der Membranplatten abgeleitet,
d) die Druckspülung wird zweifstufig gefahren, indem das Spülgas abwechselnd unter einem hohen und einem niedrigen Druck eingeleitet wird bis der gewünschte Trocknungsgrad erreicht ist, worauf der getrocknete Filterkuchen durch Öffnen der Filterpresse in üblicher Weise entfernt wird.

13. Verfahren zum Entfeuchten und Trocknen von Feststoff/Flüssigkeits-Gemischen, insbesondere von Feststoff-Suspensionen und Schlämmen, bei dem die zu behandelnde Trübe in einer Filterpresse, die mit aufheizbaren Kammerfilterplatten bestückt ist, entfeuchtet und der gebildete Filterkuchen anschließend einer Trocknung unterworfen wird, wobei die zu behandelnde Trübe über die Zuleitung einer Anzahl von nebeneinander und parallel zueinander angeordneten aufheizbaren Kammerfilterplatten zugeführt wird, die mit Filtermedium bespannt und über Drainagen an Sammelrohre angeschlossen sind, über die das Filtrat abgeleitet wird, während die Feststoffanteile als Filterkuchen vor dem Filtermedium zurückgehalten werden, mit den folgenden Merkmalen:
a) Der bei der Entwässerung gebildete Filterkuchen wird beidseitig gegen jeweils zwischen zwei in der Plattenreihe an ungerader Stelle liegende Kammerfilterplatten und parallel zu diesen angeordnete in der Plattenreihe an gerader Stelle liegende Kammerfilterplatten gedrückt, die auf eine konstante Trocknungstemperatur aufgeheizt werden,
b) das Andrücken des Filterkuchens an die Oberflächen der Kammerfilterplatten, die in der Plattenreihe an gerader Stelle liegen, erfolgt mittels eines unter Druck stehenden Gases, das über das Sammelrohr und die Drainage den in der Plattenreihe an ungerader Stelle liegenden Kammerfilterplatten zugeführt wird,
c) nach dem Aufheizen des Filterkuchens auf eine vorgegebene Temperatur wird die Zufuhr des unter Druck stehenden Gases abgestellt und ein unter niedrigem Druck stehendes Spülgas in die Kammerfilterpresse über das Sammelrohr und die Drainage der in der Plattenreihe an gerader Stelle liegenden Kammerfilterplatten eingeleitet und über die Drainage und das Sammelrohr der in der Plattenreihe an ungerader Stelle liegenden Kammerfilterplatten abgeleitet,
d) die Umstellung von Druckgas (Aufheizphase) auf Spülgas (Verdampfungsphase) und umgekehrt wird wiederholt bis der gewünschte Trocknungsgrad erreicht ist, worauf der getrocknete Filterkuchen durch Öffnen der Filterpresse in üblicher Weise entfernt wird.

## Claims

1. A method of removing moisture from and drying solid/liquid mixtures, in particular solid suspensions and slurries, in which the sludge to be treated is subjected to removal of moisture in a filter press and the filter cake formed is then subjected to a drying operation, wherein the sludge to be treated is supplied by way of the feed conduit to a number of filter plates which are arranged in juxtaposed and mutually parallel relationship and which are covered with filter medium and which are connected by way of a drainage means to a collecting pipe by way of which the filtrate is drained off while the solid components are retained as filter cake in front of the filter medium, and wherein the material from which moisture has been removed is dried by the application of heat, having the following features:
a) the filter cake formed in the step of removing water is pressed at both sides against heating plates which are respectively disposed between two filter plates and parallel thereto and which are heated to a constant drying temperature,
b) the operation of pressing the filter cake against the surfaces of the heating plates is effected by means of a gas which is under pressure and which is supplied by way of the collecting pipe and the drainage means,
c) after the step of heating the filter cake to a predetermined temperature the feed of the gas under pressure is shut off and a flushing gas which is under a lower pressure is introduced into the filter press and discharged by way of the drainage means and the collecting pipe, and
d) the change-over from pressure gas (heating phase) to flushing gas (evaporation phase) and vice-versa is repeated until the desired degree of drying of the cake is attained, whereupon the dried filter cake is removed by opening the filter press in the usual manner.

2. A method according to claim 1 characterised in that the flushing gas is introduced into the filter press by way of the feed conduit for the sludge.

3. A method according to claim 1 characterised in that the flushing gas is introduced into the gap between a heating plate and the filter cake.

4. A method according to one of claims 1 to 3 characterised in that the pressure flushing operation with the flushing gas which is under a low pressure is effected alternately under at least two different pressure stages.

5. A method according to claim 4 characterised in that at least one of the pressure stages is in the vacuum range.

6. A method according to one of claims 1 to 5 characterised in that the pressure stages in the pressure flushing operation are so selected that the temperature of the filter cake swings between two predetermined temperatures and that the change-over to another pressure stage is controlled by way of the temperature which is measured in the filter cake.

7. A method according to claim 6 characterised in that the change between the respective pressure stages is controlled in dependence on time.

8. A method according to one of claims 1 to 7 characterised in that the pressure flushing operation is effected with predried and/or heated air,

9. A method according to one of claims 1 to 8 characterised in that the operation of heating the heating plates to the temperature required for the drying operation is effected entirely or partially by means of solar energy.

10. A method of removing moisture from and drying solid/liquid mixtures, in particular solid suspensions and slurries, in which the sludge to be treated is subjected to removal of moisture in a membrane filter press and the filter cake formed is then subjected to a drying operation, wherein the sludge to be treated is supplied by way of the feed conduit to a number of membrane filter plates which are arranged in juxtaposed and mutually parallel relationship and which are covered with filter medium and which are connected by way of a drainage means to a collecting pipe by way of which the filtrate is drained off while the solid components are retained as filter cake in front of the filter medium, having the following features:
a) the filter cake formed in the step of removing water is pressed at both sides against heating plates which are respectively disposed between two membrane filter plates and parallel thereto and which are heated to a constant drying temperature,
b) the operation of pressing the filter cake against the surfaces of the heating plates is effected by pressing the membranes against the filter cake by means of gas or liquid.
c) during the entire drying operation a flushing gas which is under pressure is introduced into the filter cake to be dried, which is discharged by way of the drainage means and the collecting pipe, and
b) the pressure flushing operation is implemented in a two-stage mode by the flushing gas being introduced alternately under a high and a low pressure until the desired degree of drying is attained whereupon the dried filter cake is removed by opening the filter press in the usual manner,

11. A filter press for carrying out the method according to claims 1 to 10 comprising a number of filter plates (2) or membrane filter plates (5) which are arranged in juxtaposed and mutually parallel relationship and which are connected by way of a drainage means (4) to a collecting pipe (9), wherein installed into the array of plates between each two filter or membrane plates (2, 5) are heating plates (1) which are heatable to a given temperature, the heating plates (1) are in the form of guide rails for an apparatus, in particular scrapers or brushes, with which the cake adhering to the filter, membrane and heating plates can be removed by moving the apparatus up and down.

12. A method of removing moisture from and drying solid/liquid mixtures, in particular solid suspensions and slurries, wherein the sludge to be treated is subjected to removal of moisture in a filter press, equipped alternately with heatable membrane plates and heatable filter plates, and the filter cake formed is then subjected to a drying operation, wherein the sludge to be treated is supplied by way of the feed conduit to a number of heatable membrane and chamber filter plates which are arranged alternately in juxtaposed and mutually parallel relationship and which are covered with filter medium and which are connected by way of drainage means to collecting pipes by way of which the filtrate is drained off while the solid components are retained as filter cake in front of the filter medium, having the following features:
a) the filter cake formed in the operation of removing moisture is pressed at both sides against chamber filter plates which are respectively arranged between two membrane filter plates and in parallel relationship therewith and which are heated to a constant drying temperature,
b) the operation of pressing the filter cake against the surfaces of the chamber filter plates is effected by pressing the membranes against the filter cake by means of gas or liquid,
c) during the entire drying operation a flushing gas which is under pressure is introduced into the filter cake to be dried by way of the collecting pipe and the drainage means of the filter plates and is discharged by way of the drainage means and the collecting pipe of the membrane plates, and
d) the pressure flushing operation is implemented in a two-stage mode by the flushing gas being introduced alternately under a high and a low pressure until the desired degree of drying is attained whereupon the dried filter cake is removed by opening the filter press in the usual manner.

13. A method of removing moisture from and drying solid/liquid mixtures, in particular solid suspensions and slurries, in which the sludge to be treated is subjected to removal of moisture in a filter press which is equipped with heatable chamber filter plates and the filter cake formed is then subjected to a drying operation, wherein the sludge to be treated is supplied by way of the feed conduit to a number of heatable chamber filter plates which are arranged in juxtaposed and mutually parallel relationship and which are covered with filter medium and which are connected by way of drainage means to collecting pipes by way of which the filtrate is drained off while the solid components are retained as filter cake in front of the filter medium, having the following features:
a) the filter cake formed in the operation for removing water is pressed at both sides against respective chamber filter plates which are disposed between two chamber filter plates at an odd location in the row of plates and arranged parallel thereto and at an even location in the row of plates and which are heated to a constant drying temperature.
b) the operation of pressing the filter cake against the surfaces of the chamber filter plates which are at an even location in the row of plates is effected by means of a gas which is under pressure and which is fed by way of the collecting pipe and the drainage means to the chamber filter plates which are at the odd location in the row of plates,
c) after heating of the filter cake to a predetermined temperature the feed of the gas which is under pressure is shut off and a flushing gas which is under low pressure is introduced into the chamber filter press by way of the collecting pipe and the drainage means of the chamber filter plates which are at an even location in the row of plates and discharged by way of the drainage means and the collecting pipe of the chamber filter plates which are at an odd location in the row of plates, and
d) the change-over from pressure gas (heating phase) to flushing gas (evaporation phase) and vice-versa is repeated until the desired degree of drying is attained whereupon the dried filter cake is removed by opening the filter press in the usual manner.

## Revendications

1. Procédé de déshumidification et de séchage de mélanges solides/liquides, en particulier de suspensions de solides et de boues, pour lequel le produit trouble à traiter est déshumidifié par passage dans un filtre-presse et le gâteau de filtrage constitué est ensuite soumis à un séchage, le produit trouble à traiter étant amené, par la conduite d'amenée, à une pluralité de plaques de filtre disposées les unes à côté des autres et parallèlement entre elles, couvertes d'un milieu filtrant et raccordées, par un drainage, à un tube collecteur par l'intermédaire duquel le filtrat est évacué, tandis que les parties solides, se présentant sous la forme d'un gâteau de filtrage, sont retenues en amont du milieu filtrant et le produit déshumidifié étant séché par apport de chaleur, avec les propriétés ci-après :
a) le gâteau de filtrage constitué lors du séchage est pressé sur les deux faces contre chaque fois deux plaques de filtre et, disposées parallèlement à celles-ci, plaques de chauffage chauffées à une température de séchage constante,
b) le pressage du gâteau de filtrage sur les surfaces des plaques de filtre s'effectue au moyen d'un gaz placé sous pression qui est amené par le tube collecteur et le drainage,
c) après le chauffage du gâteau de filtrage à une température prédéterminée, l'apport de gaz sous pression est coupé et un gaz de rinçage placé sous une faible pression est injecté dans le filtre-presse et évacué par le drainage et le tube collecteur, et
d) la commutation, du gaz sous pression (phase de chauffage) au gaz de rinçage (phase d'évaporation), et inversement, est répétée jusqu'à ce que le degré de séchage souhaité du gâteau soit atteint, suite à quoi le gâteau de filtrage séché est enlevé de la manière usuelle par ouverture du filtre-presse.

2. Procédé selon la revendication 1, caractérisé en ce que le gaz de balayage est injecté dans le filtre-presse par la conduite d'amenée destinée au produit trouble.

3. Procédé selon la revendication 1, caractérisé en ce que le gaz de rinçage est injecté dans l'intervalle existant entre la plaque de chauffage et le gâteau de filtrage.

4. Procédé selon l'une des revendications 1 à 3, caractérisé en ce que le rinçage sous pression avec le gaz de rinçage placé sous faible pression est effectué en alternance sous au moins deux niveaux de pression différents.

5. Procédé selon la revendication 4, caractérisé en ce qu'au moins l'un des niveaux de pression est situé dans la plage du vide.

6. Procédé selon l'une des revendications 1 à 5, caractérisé en ce que les niveaux de pression utilisés lors du rinçage sous pression sont choisis de manière que la température du gâteau de filtrage oscille entre deux températures prédéterminées, et en ce que la commutation à un autre niveau de pression est commandée par la température mesurée dans le gâteau de filtrage,

7. Procédé selon la revendication 6, caractérisé en ce que l'alternance entre les niveaux de pression respectifs est commandée en fonction du temps.

8. Procédé selon l'une des revendications 1 à 7, caractérisé en ce que le rinçage sous pression est effectué avec de l'air préséché et/ou chauffé.

9. Procédé selon l'une des revendications 1 à 8, caractérisé en ce que le chauffage des plaques chauffantes à la température nécessaire pour le séchage s'effectue totalement ou partiellement en faisant appel à l'énergie solaire.

10. Procédé de déshumidification et de séchage de mélanges solides/liquides, en particulier de suspensions de solides et de boues, pour lequel le produit trouble à traiter est déshumidifié dans un filtre-presse à membrane et le gâteau de filtrage constitué est ensuite soumis à un séchage, le produit trouble à traiter étant amené par la conduite d'amenée d'une pluralité de plaques de filtre disposées les unes à côté des autres et parallèlement entre elles, tendues d'un milieu filtrant et raccordées par un drainage à un tube collecteur, par l'intermédiaire duquel le filtrat est évacué, tandis que les fractions solides sont retenues sous la forme de gâteau de filtrage, en amont du milieu filtrant, avec les propriétés ci-après :
a) le gâteau de filtrage constitué lors du séchage est pressé sur les deux faces, chaque fois contre des plaques de chauffage disposées entre deux plaques de filtre membrane et parallèlement à celles-ci, chauffées à une température de séchage constante,
b) le pressage du gâteau de filtrage sur les surfaces des plaques chauffantes s'effectue par pressage des membranes sur le gâteau de filtrage, par utilisation de gaz ou de liquide,
c) pendant la totalité du processus de séchage, un gaz de rinçage situé sous pression est injecté dans le gâteau de filtrage à sécher et évacué par le drainage et le tube collecteur, et
d) le rinçage sous pression est conduit en deux étapes, par le fait que le gaz de rinçage est alternativement injecté sous une haute pression et une base pression jusqu'à ce qu'on ait atteint le degré de séchage souhaité, suite à quoi le gâteau de filtrage séché est enlevé de la manière usuelle, par ouverture du filtre-presse.

11. Filtre-presse pour la mise en oeuvre du procédé selon les revendications 1 à 10, constitué d'une pluralité de plaques de filtres (2) ou plaques de filtre à membrane (5) disposées les unes à côté des autres et parallèlement entre elles, raccordées par un drainage (4) à un tube collecteur (9), entre deux plaques de filtre ou plaques de membrane (2, 5) étant intégrées, dans le paquet de plaques, des plaques chauffantes (1) qui peuvent être chauffées à une température déterminée, les plaques chauffantes (1) étant réalisées sous la forme de glissières de guidage pour un dispositif, en particulier un racloir ou des brosses, à l'aide duquel le gâteau de filtrage adhérant sur les plaques de filtre, les plaques de membrane et les plaques chauffantes peut être enlevé par levée et descente du dispositif.

12. Dispositif de déshumidification et de séchage de mélanges solides/liquides, en particulier de suspensions de solides et de boues, pour lequel le produit trouble à traiter est déshumidifié dans un filtre-presse, alternativement équipé de plaques membrane chauffables et de plaques de filtrage chauffables, et le gâteau de filtrage constitué est ensuite soumis à un séchage, le produit trouble à traiter étant amené par la conduite d'alimentation à une pluralité de plaques de filtre à membrane et de plaques de filtre à chambre chauffables, disposées les unes à côté des autres et parallèlement entre elles, tendues d'un milieu filtrant et raccordées par des drainage à des tubes collecteurs par l'intermédiaire desquels le filtrat est évacué, tandis que les parties solides sont retenues sous la forme de gâteau de filtrage en amont du milieu filtrant, présentant les propriétés ci-après :
a) le gâteau de filtrage constitué lors du séchage est pressé sur les deux faces contre chaque fois deux plaques de filtre à membrane, et, disposées parallèlement à celles-ci, de plaques de filtre à chambre, chauffées à une température de séchage constante,
b) le pressage du gâteau de filtrage sur les surfaces des plaques de filtre à chambre s'effectue par pressage des membranes sur le gâteau de filtrage, au moyen d'un gaz ou d'un liquide
c) pendant l'ensemble du processus de séchage, un gaz de rinçage placé sous pression est injecté dans le gâteau de filtrage à sécher, par le tube collecteur et le drainage des plaques filtrantes, et évacué, par le drainage et le tube collecteur des plaques membrane,
d) le rinçage sous pression est conduit en deux étapes, par le fait que le gaz de rinçage est alternativement injecté sous une haute pression et une base pression jusqu'à ce qu'on ait atteint le degré de séchage souhaité, suite à quoi le gâteau de filtrage séché est enlevé de la manière usuelle, par ouverture du filtre-presse.

13. Procédé de déshumidification et de séchage de mélanges solides/liquides, en particulier de suspensions de solides et de boues, pour lequel le produit trouble à traiter est déshumidifié dans un filtre-presse qui est garni de plaques de filtre à chambre chauffables, et le gâteau de filtrage constitué est ensuite soumis à un séchage, le produit trouble à traiter étant amené par la conduite d'alimentation à une pluralité de plaques de filtre à chambre chauffables, disposées les unes à côté des autres et parallèlement entre elles, qui sont tendues d'un milieu filtrant et raccordées par des drainage à des tubes collecteurs par l'intermédiaire desquels le filtrat est évacué, tandis que les solides sont retenus, sous la forme d'un gâteau de filtrage, en amont du milieu filtrant, avec les propriétés ci-après :
a) le gâteau de filtrage constitué lors du séchage est pressé sur les deux faces contre chaque fois deux plaques de filtre à chambres, situées en un emplacement impair dans la rangée de plaques, et plaques de filtre à chambre, situées en un emplacement pair dans la rangée de plaques, disposées parallèlement à celles-ci, chauffées à une température de séchage constante,
b) le pressage du gâteau de filtrage sur les surfaces des plaques de filtre à chambre, situées en un emplacement pair dans la rangée de plaques, s'effectue au moyen d'un gaz sous pression, qui est amené, par le tube collecteur et le drainage, aux plaques de filtre à chambre, situées en un emplacement impair dans la rangée de plaques,
c) après le chauffage du gâteau de filtrage à une température prédéterminée, l'amenée de gaz sous pression est coupée, et un gaz de rinçage placé sous une faible pression est injecté dans le filtre-presse à chambre par le tube collecteur et le drainage des plaques de filtre à chambre placées dans la rangée de plaques en un emplacement pair dans la rangée de plaques, et est évacué par le drainage et le tube collecteur des plaques de filtre à chambre placées en un endroit impair dans la rangée de plaques,
d) la commutation, du gaz sous pression (phase de chauffage) au gaz de rinçage (phase d'évaporation), et inversement, est répétée jusqu'à ce que le degré de séchage souhaité du gâteau soit atteint, suite à quoi le gâteau de filtrage séché est enlevé de la manière usuelle par ouverture du filtre-presse.
